Europäisches Patentamt

**European Patent Office**

**Office européen des brevets**

(11) Numéro de publication:

**0 034 840**

**A2**

(12) **DEMANDE DE BREVET EUROPEEN**

(21) Numéro de dépôt: **81200027.1**

(22) Date de dépôt: **12.01.81**

(51) Int. Cl.³: **B 60 K 17/34**
**B 60 K 17/30**

(30) Priorité: **16.01.80 BE 198993**

(43) Date de publication de la demande:
**02.09.81 Bulletin 81/35**

(84) Etats contractants désignés:
**AT CH DE FR GB IT LI LU NL SE**

(71) Demandeur: **Evrard, Willy**
**Place des Tilleuls, 19**
**B-5220 Andenne(BE)**

(72) Inventeur: **Evrard, Willy**
**Place des Tilleuls, 19**
**B-5220 Andenne(BE)**

(74) Mandataire: **Pirson, Jean et al,**
**c/o Bureau Gevers, S.A. rue de Livourne, 7 bte 1**
**B-1050 Brussels(BE)**

(54) **Dispositif de transmission de véhicule moteur et véhicule muni d'un tel dispositif.**

㊵ Dispositif de transmission de véhicule moteur destiné à rouler alternativement en roues motrices arrière et en roues motrices avant et arrière, comprenant un essieu moteur avant 1 comprenant une barre centrale 2 et, à chacune de ses extrémités, un renvoi d'angle 3, deux arbres de transmission 4 et 5 en prise chacun avec un de ces renvois d'angle et une boîte de transfert 6 capable de transmettre un mouvement de rotation fourni par l'arbre de sortie 7 de la boîte de vitesse à un arbre 8 relié au pont arrière et éventuellement en outre simultanément aux deux arbres de transmission précités 4 et 5.

Fig. 1

EP 0 034 840 A2

"Dispositif de transmission de véhicule moteur et véhicule muni d'un tel dispositif"

La présente invention est relative à un dispositif de transmission de véhicule moteur destiné à rouler alternativement en régime de roues motrices arrière et de roues motrices avant et arrière ainsi qu'à un véhicule moteur muni d'un tel dispositif.

On connaît des dispositifs de transmission pour véhicule de ce genre comprenant un pont avant, un arbre de transmission central relié au pont avant et une boîte de transfert capable de transmettre un mouvement de rotation fourni par l'arbre de sortie de la boîte de vitesse à un arbre relié au pont arrière et éventuellement en outre simultanément à l'arbre de transmission central susdit.

Ces dispositifs présentent l'inconvénient qu'il faut laisser un espace suffisant entre la partie supérieure du carter du pont avant et la partie inférieure du moteur pour permettre un débattement suffisant de l'essieu par rapport au moteur ou partie de celui-ci. Cette obligation nécessite une surélévation importante du moteur et par conséquent du châssis du véhicule. En général cette surélévation se situe aux environs de 25 cm.

D'autre part la tête d'un pont avant normalement utilisé ayant une hauteur importante réduit très fortement la garde au sol nécessaire pour un tous terrains. Il en résulte que le centre de gravité de la charge est situé plus haut, ce qui amène les résultats suivants :

a. La tenue de route devient mauvaise (risques de versage, mauvaise tenue en cas de vent latéral, fatigue des ressorts de suspension surchargés dans les virages).

b. Le freinage est déséquilibré du fait que le report de la charge placé plus haut surcharge l'avant et allège l'arrière et provoque le glissement des roues arrière.

c. Lors de la montée d'une côte à pourcentage élevé donc avec l'avant du véhicule plus haut, le report de la charge vers l'arrière est plus élevé, ce qui surcharge l'essieu arrière et enlève ce poids de l'avant et de ce fait diminue l'adhérence.

d. Le chargement et le déchargement sont rendus plus difficiles.

e. Les véhicules hauts passent moins facilement sous certains ponts et les arbres bas (armée, pompiers,..) et le transport avec des charges mobiles (eau, animaux, produits liquides,...) qui se déplacent très fort latéralement (en virage par exemple) présente un certain danger.

D'autre part, à la suite de l'obligation de surélever le châssis, pour essayer de maintenir des angles valables pour les arbres de transmission, il faut placer la boîte de transfert verticalement ce qui diminue la garde au sol à la partie médiane de l'empattement et le centre de gravité de la charge est surélevé d'autant.

Enfin, lorsqu'on souhaite la transformation d'un véhicule moteur à roues motrices arrière uniquement, cette transformation demande beaucoup de temps et de main-d'oeuvre et elle nécessite d'effectuer toute une série de changements dans les appareillages, pour laisser le passage libre aux différents éléments de cette transmission, comme par exemple le placement d'une barre d'accouplement articulée, le déplacement des accessoires de commande de frein, des réservoirs à fuel et à air comprimé et des roues de rechange, le placement de réducteurs au niveau des moyeux des roues avant pour obtenir une grande garde sol, etc....

La présente invention a pour but de prévoir un dispositif de transmission de véhicule moteur capable de remédier à ces inconvénients et susceptible de pouvoir être adapté indifféremment sur n'importe quel type de véhicule moteur, en particulier de camion.

Suivant l'invention, on a résolu ces problèmes à l'aide d'un dispositif de transmission de véhicule moteur destiné à rouler alternativement en régime de roues motrices arrière et de roues motrices avant et arrière, ce dispositif comprenant un essieu moteur avant comprenant une barre centrale et, à chacune de ses extrémités, un renvoi d'angle, deux arbres de transmission en prise chacun avec un de ces renvois d'angle et une boîte de transfert capable de transmettre un mouvement de rotation fourni par l'arbre de sortie de la boîte de vitesse à un arbre relié au pont arrière et éventuellement en outre simultanément aux deux arbres de transmission précités.

Suivant une forme de réalisation avantageuse de l'invention, la barre centrale de l'essieu moteur avant est avantageusement de forme tubulaire et reliée de manière fixe aux carters des renvois d'angle gauche et droit.

Suivant une autre forme de réalisation de l'invention, les arbres de transmission susdits agencés entre les renvois d'angle et la boîte de transfert passent sous et/ou à côté des longerons du châssis, du côté extérieur.

Suivant une forme de réalisation perfectionnée de l'invention la boîte de transfert comprend un arbre d'entrée entraîné par l'arbre de sortie de la boîte de vitesse, un arbre de sortie capable d'entraîner un arbre relié au pont arrière, deux prises de force gauche et droite pour les arbres de transmission susdits, un réducteur capable, dans une première position, de permettre la transmission du couple de l'arbre d'entrée à l'arbre de sortie sans modification du couple et, dans une deuxième position, de multiplier le couple et d'en transmettre une partie à l'arbre de sortie et simultanément une partie aux prises de force gauche et droite, des moyens permettant d'équilibrer les différences de vitesse entre les deux roues avant dans la deuxième position du réducteur et des moyens de commande du passage du régime à roues motrices arrière au régime à roues motrices avant et arrière.

Suivant une autre forme de réalisation avantageuse de l'invention la boîte de transfert comprend, à titre de moyens permettant d'équilibrer les différences de vitesse entre les deux roues avant en régime à roues motrices avant et arrière, un différentiel dont les satellites sont entraînés par l'arbre de sortie en rotation autour de son axe et dont les planétaires sont capables d'entraîner les deux trains d'engrenage des prises de force gauche et droite.

D'autres détails et particularités de l'invention ressortiront de la description donnée ci-après, à titre non limitatif et avec référence aux dessins annexés.

La figure 1 représente une vue du dessus d'un dispositif de transmission suivant l'invention, fixé sur le châssis d'un véhicule moteur, notamment d'un camion.

La figure 2 représente une vue en coupe, suivant la ligne II-II, de la figure 1.

La figure 3 représente une vue de dessus, partiellement brisée, de la figure 2.

La figure 4 représente une vue de dos, schématique, de la boîte de transfert.

La figure 5 représente une vue en coupe, suivant la ligne V-V, de la figure 4.

La figure 6 représente une vue d'une variante de boîte de transfert.

Sur les différentes figures, les éléments identiques ou analogues sont désignés par des références identiques.

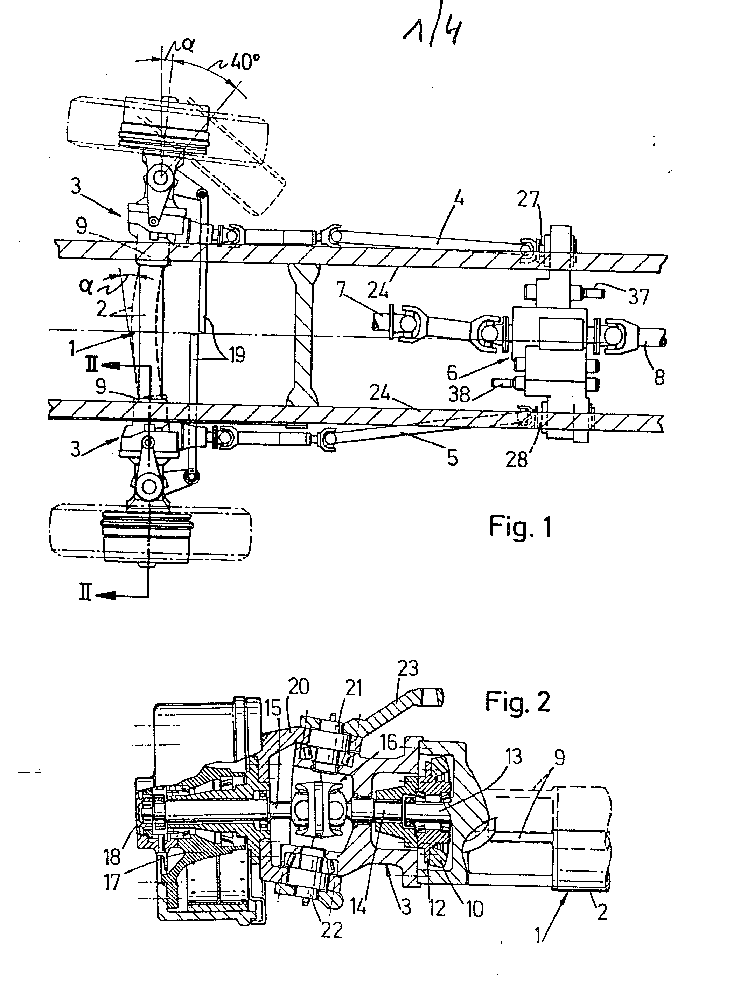

Ainsi qu'il ressort de la figure 1, le dispositif de transmission suivant l'invention comprend un essieu moteur avant 1 comprenant une barre centrale 2 et, à chacune de ses extrémités, un renvoi d'angle 3, deux arbres de transmission 4 et 5 en prise chacun avec un des renvois d'angle 3, et une boîte de transfert 6 capable de transmettre un mouvement de rotation fourni par l'arbre de sortie 7 de la boîte de vitesse non représentée à un arbre 8 relié au pont arrière non représenté et éventuellement en outre simultanément aux deux arbres de transmission 4 et 5.

La barre centrale 2 est avantageusement de forme tubulaire et elle est reliée de manière fixe aux carters des renvois d'angle 3 gauche et droit. Elle peut d'ailleurs, suivant le type de véhicule ou son utilisation, être fixée à différentes hauteurs sur ces carters, ainsi qu'il est illustré en traits interrompus sur la figure 2.

La barre centrale 2 présente, à chacune de ses extrémités, des assises 9 pour des ressorts de suspension non représentés.

Ainsi qu'il est illustré sur la moitié de dessus de la figure 1, pour augmenter éventuellement l'angle de braquage des roues avant, la barre centrale 2 représentée en traits interrompus peut être légèrement cintrée vers l'avant, d'une angle 2 α, c'est-à-dire que chacune des moitiés de la barre cintrée 2 est inclinée par rapport à l'axe de la barre droite représentée en traits pleins d'un angle α vers l'avant qui s'ajoute à l'angle de braquage de la roue intérieure au virage. Si l'angle de braquage est de 40° avec une barre droite on obtient ainsi un angle de braquage de 40° + α.

La longueur de la barre centrale 2 peut être choisie en fonction de l'entraxe des ressorts de suspension avant du véhicule sur lequel le dispositif de transmission suivant l'invention va être placé.

Etant donné les particularités de cet essieu avant, il peut être situé sensiblement à la même hauteur du sol qu'un essieu directeur normal de véhicule à roues motrices arrière uniquement et le débattement entre l'essieu moteur avant et le carter du moteur du véhicule sur lequel il est monté est sensiblement le même que celui qui existe entre l'essieu directeur susdit et le carter du moteur de son véhicule.

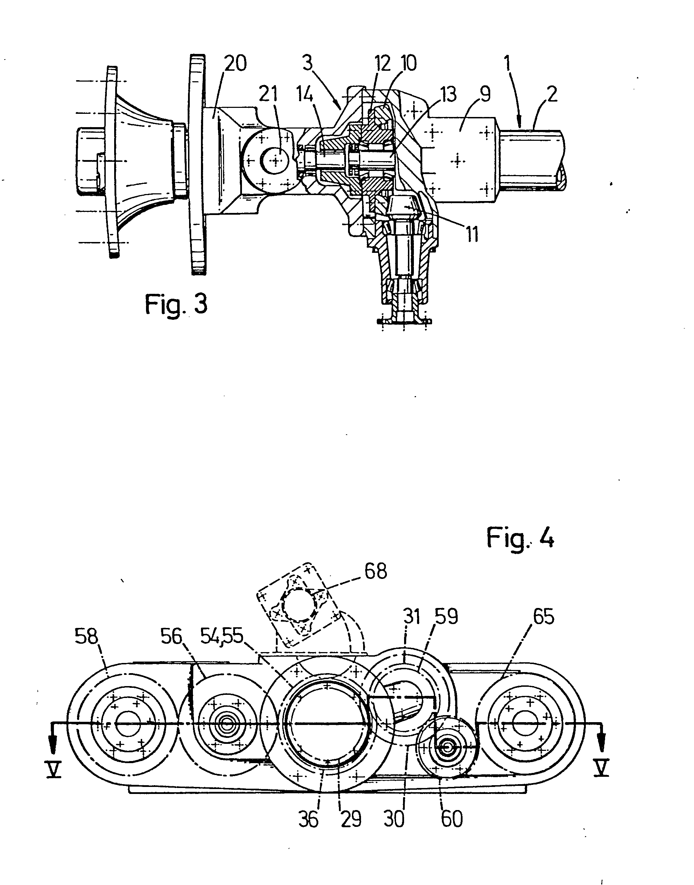

Ainsi qu'il ressort des figures 2 et 3, chacun des renvois d'angle 3 comprend une couronne 10 coopérant avec un pignon d'attaque 11 de l'arbre de transmission correspondant, un porte-couronne 12 supporté par des galets de roulement sur un axe 13 du renvoi d'angle. Le porte-couronne 12 est en prise par l'intermédiaire de cannelures avec un tronçon 14 de l'arbre de roue, ce dernier comprenant également un deuxième tronçon 15 relié au premier 14 par l'intermédiaire d'un joint homocinétique 16. Le deuxième tronçon 15 est relié au moyeu 17 de la roue par un plateau 18 éventuellement décrabotable de manière à permettre le désengagement complet de l'arbre de transmission, de la couronne et du pignon d'attaque, si on le souhaite.

L'essieu moteur avant, tel qu'illustré, est un essieu motodirecteur comprenant une seule barre d'accouplement droite 19 (v. figure 1) qui, ainsi qu'il ressort des figures 2 et 3, est reliée de chaque côté à une fusée 20 de roue supportée sur un renvoi d'angle 3, par l'intermédiaire de deux axes de fusée 21 et 22 agencés coaxialement sur le carter du renvoi d'angle, de part et d'autre du joint homocinétique 16, de manière à permettre le pivotement des fusées autour de leur axe et donc le braquage des roues. Une des fusées est actionnée directement par la bielle de direction non représentée, par l'intermédiaire du bras 23, l'autre des fusées étant accouplée à la première par la barre d'accouplement 19. Cette dernière est située derrière l'essieu avant 1 et est par conséquent bien protégée par ce dernier.

Les arbres de transmission 4 et 5 peuvent chacun être formés de plusieurs arbres à cardan, ainsi qu'il ressort de la figure 1, et ils sont agencés entre les renvois d'angle 3 et des prises de force de la boîte de transfert 6 de manière à passer sous les longerons 24 du châssis et/ou, en vue de dessus, à côté d'eux, du côté extérieur.

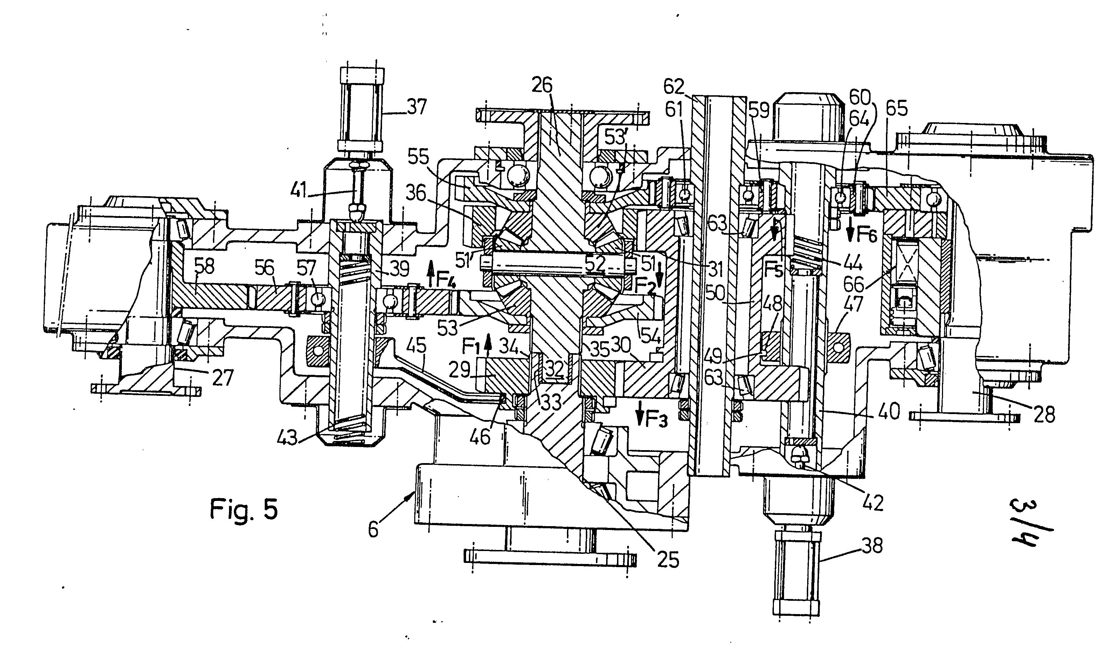

Ainsi qu'il ressort en particulier des figures 4 et 5, la boîte de transfert 6 du dispositif de transmission suivant l'invention illustré comprend un arbre d'entrée 25 entraîné par l'arbre de sortie 7 (figure 1) de la boîte de vitesse, un arbre de sortie 26 entraînant un arbre 8 relié au pont arrière et deux prises de force 27 et 28. L'arbre de sortie 26 est monté coaxialement à l'arbre d'entrée 25 et son extrémité intérieure 32, de plus petit diamètre, est logée dans une buselure 33 prévue à cet effet dans une cavité pratiquée dans la face frontale de l'extrémité intérieure de l'arbre d'entrée 25. Dans cette buselure, l'arbre de sortie 26 peut pivoter librement par rapport à l'arbre d'entrée. L'extrémité intérieure de l'arbre d'entrée 25 et l'extrémité intérieure de l'arbre de sortie 26 qui est située en dehors de la buselure 33 sont pourvues toutes deux sur leur périphérie de cannelures 34 et respectivement 35. A l'intérieur de la boîte de transfert est prévu un réducteur capable, dans une première position, de transmettre le couple de l'arbre d'entrée 25 à l'arbre de sortie 26 sans modification du couple et, dans une deuxième position, de multiplier le couple et d'en transmettre une partie à l'arbre de sortie 26 et simultanément une partie aux prises de force 27 et 28. Ce réducteur comprend un pignon menant 29 et des pignons de renvoi menés 30 et 31. Le pignon menant 29 est une roue dentée agencée autour de l'arbre d'entrée 25 de manière à être entraînée en rotation par les cannelures 34 de l'extrémité intérieure de cet arbre.

Dans la première position du réducteur, le pignon menant 29 est entraîné par les cannelures 34 de l'arbre d'entrée 25 et il est agencé de manière à entraîner l'arbre de sortie 26 par ses cannelures 35, c'est-à-dire que dans cette position, non représentée, le pignon 29 a été déplacé depuis sa position illustrée, suivant la flèche $F_1$, de manière à recouvrir à la fois les extrémités intérieures des arbres d'entrée et de sortie. Dans cette première position du réducteur, les pignons de renvoi menés 30 et 31 sont tous deux dans une position de désengagement, non représentée, qui correspond à un déplacement de ces pignons suivant les flèches $F_2$ et $F_3$.

La deuxième position du réducteur est celle illustrée sur la figure 5. Le pignon menant 29 est entraîné par l'arbre d'entrée 25 et est en prise avec le pignon mené 30, l'autre pignon de renvoi mené 31 étant alors en prise avec une roue dentée 36 solidaire de l'arbre de sortie 26, ainsi que, dans le cas illustré, indirectement en prise avec deux trains d'engrenage destinés aux prises de force 27 et 28.

Dans cette deuxième position, le réducteur multiplie le couple de l'arbre d'entrée, par exemple dans un rapport de 1,5/1. Le supplément de couple fourni par le réducteur est consommé par l'essieu moteur avant engagé.

Des moyens de commande sont prévus pour commander le déplacement du réducteur entre ses deux positions et ils sont agencés de façon que, pour passer de l'une à l'autre de ces deux positions, le réducteur soit obligé de passer par une troisième position dans laquelle le pignon menant 29, entraîné par l'arbre d'entrée 25, n'est en prise avec aucun autre organe et les pignons de renvoi menés 30 et 31 sont en position de désengagement. Dans cette position donc, le pignon menant 29 est dans la position illustrée et les pignons menés 30 et 31 sont dans la position qui correspond à leur déplacement suivant les flèches $F_2$ et $F_3$.

Dans l'exemple illustré, ces moyens de commande comprennent deux vérins 37 et 38, fixés sur le carter de la boîte de transfert 6, qui sont chacun capables de déplacer, suivant des axes parallèles aux axes des arbres d'entrée et de sortie, un arbre baladeur 39 et respectivement 40. Par l'intermédiaire de leur poussoir 41 et respectivement 42, les vérins 37 et 38 éloignent leur arbre baladeur respectif. Lorsque les poussoirs cessent leur action, des ressorts de rappel 43 et respectivement 44, agencés entre la paroi interne du carter de la boîte de transfert et le fond d'une cavité prévue axialement dans chaque arbre baladeur, ramènent ces derniers dans leur position de départ. L'arbre baladeur 39 supporte une fourchette 45 qui enserre une gorge 46 prévue sur le pignon menant 29 du réducteur. L'arbre baladeur 40 peut entraîner dans son coulissement une roue 47 présentant une gorge latérale 48 dans laquelle fait saillie une fourchette 49 agencée sur l'arbre intermédiaire 50 solidaire des pignons de renvoi menés 30 et 31.

Le vérin 37 est par conséquent capable d'entraîner le coulissement axial du pignon menant 29, entre sa première position, correspondant à la première position du réducteur, et sa deuxième position illustrée, sous l'action de son poussoir 41 sur l'arbre baladeur 39 et la fourchette 45, et son coulissement axial inverse sous l'action du ressort de rappel 43. Le vérin 38 est lui capable d'entraîner le coulissement axial des pignons de renvoi menés 30 et 31, entre leur première position, correspondant à la troisième position du réducteur, et leur deuxième position illustrée, sous l'action du poussoir 42 sur l'arbre baladeur 40, la fourchette 49 et l'arbre intermédiaire 50, et leur coulissement axial inverse sous l'action du ressort de rappel 44. Donc, en cas de fuite ou d'anomalie dans le circuit d'agent sous pression des vérins, ces derniers ramènent automatiquement, sous l'action des ressorts de rappel 43 et 44, le pignon menant 29 et les pignons de renvoi menés 30 et 31, dans leur première position, ce qui correspond à la première position du réducteur.

Il faut noter que, étant donné que le réducteur lors de son déplacement doit nécessairement passer par la troisième position, les vérins 37 et 38 entrent en action successivement de la manière suivante. Lorsque le réducteur est dans sa première position, le vérin 37 déplace le pignon menant 29 dans sa deuxième position et le réducteur est alors dans la troisième position susdite, puis le vérin 38 déplace les pignons de renvoi menés dans leur deuxième position, ce qui correspond à la deuxième position du réducteur. Le fonctionnement est inversé pour le retour à la première position du réducteur.

Afin d'équilibrer les différences de vitesse qui peuvent se produire entre les deux roues avant, la boîte de transfert 6 de la figure 5 comprend un différentiel dont les satellites 51 et 51' sont montés fous sur un axe de support 52 agencé au travers d'un orifice prévu dans l'arbre de sortie 26, transversalement à l'axe de ce dernier, et sont ainsi entraînés en rotation autour de l'axe de l'arbre de sortie 26, et dont les planétaires 53 et 53' sont montés fous sur l'arbre de sortie et supportent chacun un pignon denté 54 et respectivement 55, capable d'entrer en prise chacun avec un des trains d'engrenages des prises de force 27 et 28.

Dans l'exemple illustré, le train d'engrenage de la prise de force 27 comprend un pignon 56, supporté par un roulement 57 sur l'arbre baladeur 39, de manière à pouvoir pivoter autour de l'axe de ce dernier, entre un pignon 58 prévu sur la prise de force 27 et le pignon denté 54 du planétaire 53 du différentiel. Sous l'action du poussoir du vérin 37, le pignon 56 est déplacé dans la position en prise avec les pignons 54 et 58, illustrée, à partir d'une position non représentée qui correspond à un déplacement du pignon 56 suivant la flèche $F_4$. Ce déplacement dans l'exemple illustré est ainsi obtenu simultanément au déplacement du pignon menant 29. Le train d'engrenages de la prise de force 28 comprend deux pignons 59 et 60. Le pignon 59 est supporté par un roulement 61 sur un arbre baladeur 62, de manière à pouvoir pivoter autour de l'axe de ce dernier qui supporte également, par des roulements 63, l'arbre intermédiaire 50 des pignons de renvoi menés 30 et 31, de manière à lui permettre de pivoter autour de son axe. Cet arbre baladeur 62 est donc entraîné conjointement à l'arbre baladeur 40 dans son coulissement. Le pignon 60 est supporté par un roulement 64 sur l'arbre baladeur 40, de manière à pouvoir pivoter autour de l'axe de ce dernier. Le pignon 59, en position de prise, est agencé entre le pignon 55 du planétaire 53' du différentiel et le pignon 60, ce dernier étant à son tour en prise avec un pignon 65 prévu sur la prise de force 28. Sous l'action du poussoir 42 du vérin 38, les pignons 59 et 60 sont déplacés dans la position en prise avec les pignons 55 et 65, illustrée, à partir d'une position non représentée qui correspond à un déplacement des pignons 59 et 60 suivant les flèches $F_5$ et $F_6$. Comme les arbres baladeurs 40 et 62 et l'arbre intermédiaire 50 sont solidaires dans leur mouvement de coulissement, ces déplacements sont obtenus simultanément au déplacement des pignons de renvoi menés 30 et 31. En cas de fuite ou d'anomalie dans le circuit de l'agent sous pression des vérins, les pignons des trains d'engrenages sont ramenés automatiquement dans leur position hors de prise grâce à l'action des ressorts de rappel. Dans cette position, correspondant à la première position du réducteur, et donc au régime des roues motrices arrière uniquement, il n'y a donc dans la boîte de transfert 6 plus aucun pignon engrené ce qui ramène au minimum la consommation d'énergie du système de transmission, évite le bruit et l'usure.

La boîte de transfert 6 se fixe sur les longerons 24 du châssis par des équerres appropriées à chaque modèle de véhicule à n'importe quel endroit sur la longueur afin que la place idéale puisse être trouvée pour que les angles d'entrée et de sortie des arbres de cardan 7 et 8 restent dans les limites optimum. Cette fixation est rendue possible par l'agencement, dans la boîte de transfert, des axes des prises de force 27 et 28, de l'arbre baladeur 39 et des arbres d'entrée 25 et de sortie 26 parallèlement l'un à l'autre dans un même plan, seuls les axes des arbres 40 et 62 étant agencés, parallèlement aux autres, dans des plans légèrement inférieur et respectivement supérieur. Cette faible hauteur de boîte de transfert laisse une garde au sol au milieu du châssis, et permet éventuellement un montage facultatif d'une prise de force supplémentaire 68 (figure 4) vers l'avant ou vers l'arrière, située directement au-dessus de l'arbre de sortie 26 et entraînée par ce dernier.

Dans l'exemple de la figure 5, entre le pignon 65 et la prise de force 28 est agencé un limiteur de couple, désigné d'une manière générale par la référence 66 et représenté uniquement de manière schématique sur la figure 5, qui en coopération avec le différentiel, sert de moyen permettant d'équilibrer les différences de vitesse entre le train de roues avant et le train de roues arrière, en régime de roues motrices avant et arrière.

Le dispositif de transmission suivant l'invention présente de nombreux avantages :

- Les systèmes de freinage, de suspension et de direction sont les mêmes que ceux des véhicules moteurs à essieu directeur normal et ils ne doivent donc pas être changés, lors de la transformation d'un véhicule à roues motrices arrière en véhicule à roues motrices avant et arrière.

- La garde au sol de l'essieu moteur avant est supérieure ou égale à celle des véhicules à essieu moteur avant connus tout en conservant la même position du châssis et donc un centre de gravité nettement plus bas et par conséquent en obtenant de meilleures conditions de freinage, de tenue de route et d'adhérence.

- L'utilisation de plusieurs essieux moto-réducteurs montés en tandem peut être envisagée.

- Le montage de cet essieu moto-réducteur, dans les mêmes limites de temps, sur une ligne d'assemblage standard telle que celle utilisée pour des essieux non moteurs.

- Le passage des arbres de transmission sous et à l'extérieur des longerons du châssis permet un montage rapide de la traction avant sans devoir déplacer d'accessoires, lorsqu'on veut transformer un véhicule à traction arrière.

- Le poids de l'essieu moteur est nettement inférieur à un pont avant moteur de même capacité, en particulier parce que le différentiel est installé dans la boîte de transfert et que des réducteurs au niveau des moyeux ne sont pas nécessaires pour obtenir une grande garde au sol.

- Le montage aisé du dispositif de transmission même sur des véhicules de marques différentes.

- La faible hauteur de boîte de transfert permet sa fixation sur les longerons du châssis, et non sur les traverses, et laisse la grande garde au milieu du châssis.

- La mise en traction arrière dégage les pignons de la boîte de transfert les uns des autres.

- Grâce au fait que :

a. il n'est pas nécessaire de modifier des organes moteurs pour loger la tête de pont,

b. que les arbres de transmission sont logés dans des passages libres d'accessoires ou d'organes encombrants,

    c. qu'il n'est nullement nécessaire de modifier la suspension arrière,

    d. que la boîte de transfert se fixe directement sur les longerons sans tenir compte de l'emplacement des traverses,

    e. qu'aucune tringlerie mécanique de commande ou de sécurité n'est nécessaire,
tout l'équipement traction avant peut être récupéré et employé sur un autre véhicule même de modèle ou de marque différents et ceci à peu de frais puisqu'il ne s'agit que de montage et non de transformation très coûteuse.

    Il doit être entendu que la présente invention n'est en aucune façon limitée à la forme de réalisation décrite ci-dessus et que bien des modifications peuvent y être apportées sans sortir du cadre du présent brevet.

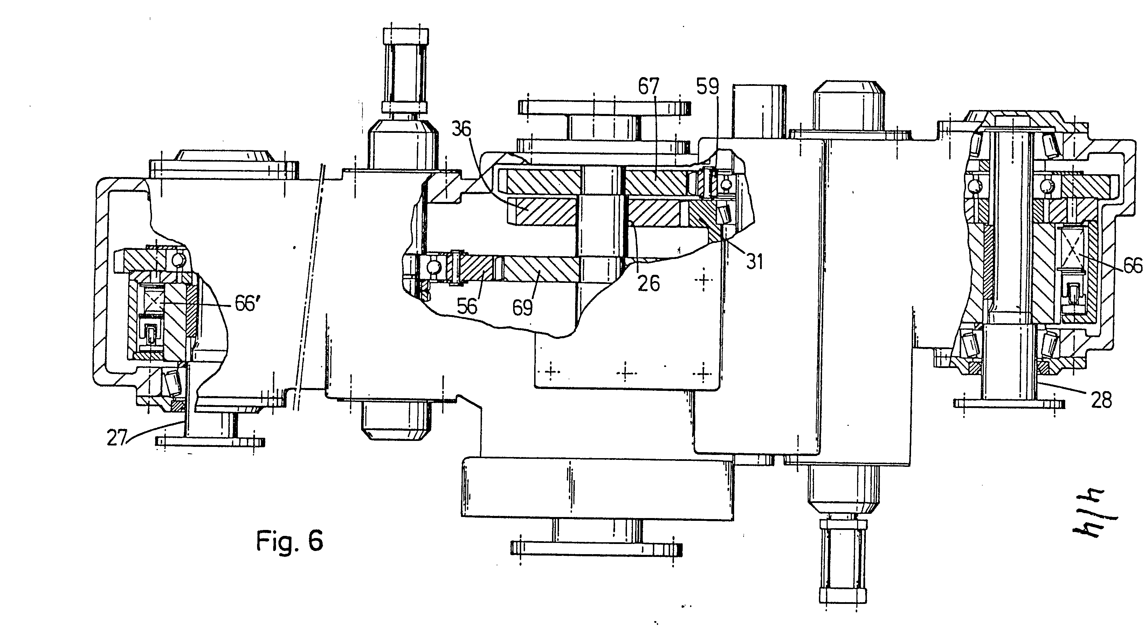

    On peut par exemple prévoir dans la boîte de transfert, à titre de moyens permettant d'équilibrer les différences de vitesse entre les deux roues avant motrices, au lieu d'un différentiel, deux limiteurs de couple 66 et 66' agencés chacun entre, d'une part, le réducteur et, d'autre part, chacune des prises de force gauche et droite. Ainsi que cela ressort de la figure 6, la roue dentée 36 de l'arbre de sortie 26, entraînée par le pignon de renvoi mené 31 du réducteur, entraîne par la roue dentée 69 solidaire de l'arbre de sortie 26 le pignon 56 du train d'engrenages de la prise de force 27 tandis qu'une roue dentée 67, identique à la roue 69 et agencée elle aussi sur l'arbre de sortie 26, entraîne le pignon 59 du train d'engrenages de la prise de force 28.

## REVENDICATIONS

1. Dispositif de transmission de véhicule moteur destiné à rouler alternativement en roues motrices arrière et en roues motrices avant et arrière, caractérisé en ce qu'il comprend un essieu moteur avant (1) comprenant une barre centrale (2) et, à chacune de ses extrémités, un renvoi d'angle (3), deux arbres de transmission (4,5) en prise chacun avec un de ces renvois d'angle (3) et une boîte de transfert (6) capable de transmettre un mouvement de rotation fourni par l'arbre de sortie (7) de la boîte de vitesse à un arbre (8) relié au pont arrière et éventuellement en outre simultanément aux deux arbres de transmission (4,5) précités.

2. Dispositif de transmission suivant la revendication 1, caractérisé en ce que la barre centrale (2) de l'essieu moteur avant (1) est avantageusement de forme tubulaire et est reliée de manière fixe aux carters des renvois d'angle (3) gauche et droit.

3. Dispositif de transmission suivant la revendication 2, caractérisé en ce que la barre centrale (2) de l'essieu moteur avant (1) peut être fixée aux carters des renvois d'angle (3) à différentes hauteurs.

4. Dispositif de transmission suivant l'une quelconque des revendications 1 à 3, caractérisé en ce que la barre centrale (2) présente, à chacune de ses extrémités, des assises (9) pour des ressorts de suspension avant.

5. Dispositif de transmission suivant l'une quelconque des revendications 1 à 4, caractérisé en ce que la barre centrale (2) est, pour augmenter l'angle de braquage, légèrement cintrée en V vers l'avant, d'un angle (2α) dont la moitié s'ajoute à l'angle de braquage de la roue intérieure au virage.

6. Dispositif de transmission suivant l'une ou l'autre des revendications 4 et 5, caractérisé en ce que la longueur de la barre centrale (2) est fonction de l'entraxe des ressorts de suspension avant.

7. Dispositif de transmission suivant l'une quelconque des revendications 1 à 6, caractérisé en ce que l'essieu moteur avant (1) est situé sensiblement à la même hauteur du sol qu'un essieu directeur normal de véhicule à roues motrices arrière uniquement et en ce que le débattement entre l'essieu moteur avant (1) et le carter du moteur du véhicule est sensiblement le même que celui existant entre un essieu directeur normal et le carter du moteur de ce véhicule.

8. Dispositif de transmission suivant l'une quelconque des revendications 1 à 7, caractérisé en ce que chacun des renvois d'angle (3) comprend une couronne (10) coopérant avec un pignon d'attaque (11) de l'arbre de transmission (4,5) correspondant, un porte-couronne (12) entraîné par la couronne (10) et entraînant un arbre de roue formé de deux tronçons (14,15) reliés par un joint.homocinétique (16).

9. Dispositif de transmission suivant l'une quelconque des revendications 1 à 8, caractérisé en ce que l'essieu moteur avant (1) est un essieu motodirecteur comprenant une barre d'accouplement droite (19).

10. Dispositif de transmission suivant la revendication 9, caractérisé en ce que chaque renvoi d'angle (3) supporte une fusée (20) de roue par l'intermédiaire de deux axes de fusée (21,22) agencés coaxialement sur le carter de chacun des renvois d'angle (3), de part et d'autre du joint homocinétique (16), de manière à permettre le pivotement des fusées (20) par rapport aux renvois d'angle (3), sous l'action d'une bielle de direction et de la barre d'accouplement (19) reliée à à chacune des fusées.

11. Dispositif de transmission suivant l'une quelconque des revendications 1 à 10, caractérisé en ce que les arbres de transmission (4,5) susdits, agencés entre les renvois d'angle (3) et la boîte de transfert (6), passent sous et/ou à côté des longerons (24) du châssis, du côté extérieur.

12. Dispositif de transmission suivant la revendication 11, caractérisé en ce que chacun des arbres de transmission (4,5) peut être formé de plusieurs arbres à cardan.

13. Dispositif de transmission suivant l'une quelconque des revendications 1 à 12, caractérisé en ce que la boîte de transfert (6) comprend un arbre d'entrée (25) entraîné par l'arbre de sortie (7) de la boîte de vitesse, un arbre de sortie (26) capable d'entraîner un arbre (8) relié au pont arrière, deux prises de force gauche et droite (27,28) pour les arbres de transmission (4,5) susdits, un réducteur capable, dans une première position, de permettre la transmission du couple de l'arbre d'entrée (25) à l'arbre de sortie (26) sans modification du couple et, dans une deuxième position, de multiplier le couple et d'en transmettre une partie à l'arbre de sortie (26) et simultanément une partie aux prises de force gauche et droite (27,28), des moyens permettant d'équilibrer les différences de vitesse entre les deux roues avant dans la deuxième position du réducteur et des moyens de commande du passage du régime à roues motrices arrière au régime à roues motrices avant et arrière.

14. Dispositif de transmission suivant la revendication 13, caractérisé en ce que le réducteur comprend un pignon menant (29) et des pignons de renvoi

menés (30,31), toutes les baladeurs, et en ce que, dans la première position du réducteur, le pignon menant (29) est entraîné par l'arbre d'entrée (25) et est agencé de manière à entraîner l'arbre de sortie (26), les pignons de renvoi menés (30,31) étant en position de désengagement, et en ce que, dans la deuxième position du réducteur, le pignon menant (29) est entraîné par l'arbre d'entrée (25) et est agencé de manière à entraîner l'un (30) des pignons menés, l'autre (31) de ceux-ci étant en positition d'engagement avec une roue dentée (36) de l'arbre de sortie (26) et deux trains d'engrenages en liaison chacun avec une des prises de force (27,28).

15. Dispositif de transmission suivant la revendication 14, caractérisé en ce que l'arbre de sortie (26) est monté coaxialement à l'arbre d'entrée (25), en ce que son extrémité (32), opposée à son extrémité de sortie, est logée dans une buselure (33) prévue à cet effet dans l'extrémité de l'arbre d'entrée (25), de manière à pouvoir pivoter librement par rapport à l'arbre d'entrée (25) dans la deuxième position du réducteur, et en ce que cette extrémité (32) de l'arbre de sortie présente, sur sa périphérie située hors de la buselure (33), des cannelures (35) destinées à coopérer avec le pignon menant (29) du réducteur, dans la première position du réducteur.

16. Dispositif de transmission suivant l'une ou l'autre des revendications 14 et 15, caractérisé en ce que les moyens de commande susdits sont agencés de manière à déplacer le réducteur de sa première position dans sa deuxième position et inversement, par l'intermédiaire d'une troisième position dans laquelle le pignon menant (29) du réducteur est entraîné par l'arbre d'entrée (25) sans être en prise avec un autre organe, et les pignons menés (30,31) sont en position de désengagement.

17. Dispositif de transmission suivant la revendication 16, caractérisé en ce que les moyens de commande comprennent deux vérins (37,38) dont l'un (37) agit, par l'intermédiaire d'un premier arbre baladeur (39), sur le pignon menant (29) du réducteur de manière à le déplacer, entre sa première position correspondant à la première position du réducteur et sa deuxième position correspondant à la troisième position du réducteur, et inversement, et dont l'autre (38) agit, par l'intermédiaire d'un deuxième arbre baladeur (40), sur les pignons de renvoi menés (30,31), montés eux-mêmes sur un troisième arbre baladeur (62) de manière à pouvoir pivoter par rapport à ce dernier, de manière à les déplacer entre leur première position correspondant à la troisième position du réducteur et leur deuxième position correspondant à la deuxième position du réducteur, et inversement.

18. Dispositif de transmission suivant la revendication 17, caractérisé en ce que les vérins (37,38) sont agencés de manière que, en cas de fuite ou d'anomalie dans le circuit d'agent sous pression des vérins (37,38), ces derniers ramènent automatiquement, sous l'action de ressorts de rappel (43,44), le pignon menant (29) et les pignons de renvoi menés (30,31) du réducteur dans leur position correspondant à la première position du réducteur.

19. Dispositif de transmission suivant l'une quelconque des revendications 13 à 18, caractérisé en ce que la boîte de transfert (6) comprend, à titre de moyens permettant d'équilibrer les différences de vitesse entre les deux roues avant en régime à roues motrices avant et arrière, un différentiel dont les satellites (51,51') sont entraînés, par l'arbre de sortie (26), en rotation autour de son axe et dont les planétaires (53,53') sont capables d'entraîner les prises de force (27,28) gauche et droite.

20. Dispositif de transmission suivant la revendication 19, caractérisé en ce que les satellites (51,51') sont montés fous sur un axe de support (52) agencé au travers d'un orifice prévu à cet effet dans l'arbre de sortie (26), transversalement à l'axe de ce dernier, et en ce que les planétaires (53,53') sont montés fous sur l'arbre de sortie (26) et supportent chacun un pignon denté (54,55) capable d'entrer en prise chacun avec un des trains d'engrenages des prises de force (27,28) gauche et droite.

21. Dispositif de transmission suivant l'une quelconque des revendications 17 à 20, caractérisé en ce que l'un des trains d'engrenages comprend un pignon (56), supporté par le premier arbre baladeur (39) de manière à pouvoir pivoter autour de l'axe de ce dernier entre un pignon (58) prévu sur la prise de force correspondante (27) et un pignon (69) entraîné par l'arbre de sortie (26) ou respectivement le pignon (54) d'un des planétaires (53) du différentiel et en ce que l'autre train d'engrenages comprend deux pignons (59,60) mutuellement engrenés, dont l'un (60) est supporté par le deuxième arbre baladeur (40) de manière à pouvoir pivoter par rapport à l'axe de ce dernier entre un pignon (65) prévu sur la prise de force correspondante (28) et l'autre (59) des deux pignons précités, ce dernier étant supporté par le troisième arbre baladeur (62), de manière à pouvoir pivoter par rapport à son axe entre le premier (60) des deux pignons précités et un pignon (67) entraîné par l'arbre de sortie (26), ou respectivement le pignon (55) de l'autre (53') des planétaires du différentiel.

22. Dispositif de transmission suivant l'une quelconque des revendications 14 à 21, caractérisé en ce que les moyens de commande susdits sont capables de désengager tous les pignons de boîte de transfert (6) les uns des autres, en régime de roues motrices arrière uniquement.

23. Dispositif de transmission suivant la revendication 22, caractérisé en ce que l'un (37) des vérins est agencé coaxialement au premier arbre baladeur (39), lequel est relié par une première fourchette (45) au pignon menant (29) du réducteur, de manière à déplacer le pignon (56) supporté par cet arbre baladeur (39) entre une position en prise avec le pignon (54) d'un (53) des planétaires du différentiel et le pignon (58) de la prise de force correspondante (27) et respectivement une position hors de prise, simultanément au déplacement du pignon menant (29) du réducteur entre sa deuxième et respectivement sa première position et en ce que l'autre (38) des vérins est agencé coaxialement au deuxième arbre baladeur (40), lequel est relié par une deuxième fourchette (49) au troisième arbre baladeur (62), de manière à déplacer conjointement les deux pignons (59,60) mutuellement engrenés précités, supportés par des arbres baladeurs (62, 40), entre une position en prise avec le pignon (55) de l'autre (53') des planétaires du différentiel et le pignon (65) de la prise de force correspondante (28) et respectivement une position hors de prise, simultanément au déplacement des pignons de renvoi menés (30,31) du réducteur, montés sur le troisième arbre baladeur (62), entre leur deuxième et respectivement leur première position.

24. Dispositif suivant l'une quelconque des revendications 17 à 23, caractérisé en ce que les axes des prises de force (27,28), des arbres d'entrée (25) et de sortie (26), et du premier arbre baladeur (39) sont agencés parallèlement l'un à l'autre dans un même plan, les axes des deuxième et troisième arbres baladeurs (40,62) étant parallèles aux autres mais situés dans un plan légèrement inférieur et respectivement supérieur.

25. Dispositif de transmission suivant l'une quelconque des revendications 13 à 18 et 21, 22 et 24, caractérisé en ce qu'il comprend, à titre de moyens permettant d'équilibrer-les différences de vitesse entre les deux roues avant en régime de roues motrices avant et arrière, deux limiteurs de couple (66,66') agencés chacun entre, d'une part, le réducteur, et, d'autre part, une des prises de force gauche et droite (27,28).

26. Dispositif de transmission suivant l'une quelconque des revendications 19 à 24, caractérisé en ce qu'il comprend, à titre de moyens permettant d'équilibrer les différences de vitesse entre les roues avant et simultanément d'équilibrer les différences de vitesse entre le train de roues avant et le train de roues arrière , en régime à roues motrices avant et arrière, le différentiel susdit (51,51',53,53') et un limiteur de couple (66) agencé entre le différentiel et une des prises de force (27, 28) gauche ou droite.

27. Dispositif de transmission suivant l'une quelconque des revendications 1 à 25, caractérisé en ce que la boîte de transfert (6) est fixée sur les longerons (24) du châssis du véhicule à n'importe quel endroit approprié pour que les angles d'entrée et de sortie des arbres de transmission (4,5) restent dans les limites optimum.

28. Dispositif de transmission suivant l'une quelconque des revendications 1 à 27, caractérisé en ce qu'il est monté sur un châssis de véhicule supportant un moteur et des systèmes de freinage, de suspension et de direction qui sont identiques à ceux d'un véhicule à roues motrices arrière uniquement et sont agencés sur ce châssis de la même façon.

29. Dispositif de transmission suivant l'une quelconque des revendications 13 à 28, caractérisé en ce que la boîte de transfert (6) peut comprendre une prise de force supplémentaire (68), agencée au-dessus de l'arbre de sortie (26) de manière à être entraînée en rotation par ce dernier.

30. Dispositif de transmission suivant l'une quelconque des revendications 8 à 29, caractérisé en ce que les moyeux (17) des roues avant sont équipés d'un système de plateaux décrabotables (18) permettant le désengagement complet des arbres de transmission (4,5), des couronnes (10) et des pignons d'attaque (11).

31. Véhicule moteur, caractérisé en ce qu'il est pourvu d'un dispositif de transmission suivant l'une quelconque des revendications 1 à 30.

α  40°

3

9

α

2

1

II

9

3

II

4    27

7    24

24

6

38

37

8

5    28

**Fig. 1**

23

20    21

15

16    13    9

18

17

14    3    12    10

22

1    2

**Fig. 2**

Fig. 3

Fig. 4

Fig. 5

Fig. 6